# EUROPÄISCHE PATENTANMELDUNG

(11) **EP 0 794 648 A2**
(43) Veröffentlichungstag der Anmeldung: **10.09.1997**
(21) Anmeldenummer: 97101586.2
(22) Anmeldetag: 01.02.1997
(51) Int. Cl.: H04M 3/38, H04M 3/50, H04M 3/42, H04M 15/00

(54) **Verfahren und Vorrichtung zum universellen und gesicherten Zugang zu angebotenen Multimediadiensten über das Telefonnetz**

(30) Priorität: 09.03.1996 DE 19609232
(71) Anmelder: Deutsche Telekom AG, 53113 Bonn (DE)
(72) Erfinder: Korst, Uwe K. H., Dipl.-Ing., 64625 Bensheim (DE)

(57) **Zusammenfassung**

Es wird ein Verfahren und eine Vorrichtung zum universellen und gesicherten Zugang zum Telefonnetz und zu angebotenen Multimedia- und Operatordiensten angegeben, daß zum Homebanking, zum Laden von elektronischen Geldbörsen, zu Operatordiensten oder für Notfalldienste für medizinische Zwecke mittels Chipkarten dient. Die Vorrichtung bzw. das Multimediagerät (29) besteht im wesentlichen aus einer sehr kleinen mobilen und tragbaren Einheit, die mit einer Tastatur (31), mit einem Display (36), mit einem klappbaren Teil (34) mit integriertem Mikrofon (35) und mit einem MFV-Sender (7) sowie einer Einschubvorrichtung (37) für mobile Datenträger (1) ausgerüstet ist. Sowohl der mobile Datenträger als auch das Multimediagerät (29) besitzen eigene Speicher (4 bzw. 10) als auch eine eigene Steuereinheit (3 bzw. 8) sowie jeweils eine Einheit bzw. Einrichtung (2 bzw. 6) zum Datenaustausch. Der mobile Datenträger (1) verfügt auch über eine eigene kryptografische Verschlüsselungseinheit (5). Damit können von der Eingabetastatur (31) Ziffern eingegeben werden, die an einen eingesteckten mobilen Datenträger (1) übertragen werden. Dieser steckbare, mobile Datenträger (1), wie zum Beispiel eine Chipkarte oder eine Plug-In-Chipkarte ist nun in der Lage, die über die Tastatur (31) eingegebenen Daten zu verschlüsseln. Nach der Verschlüsselung erfolgt die Rückgabe der Daten an das Multimediagerät (29). Unmittelbar danach werden die Daten über einen integrierten MFV-Sender (7) an das Mikrofon eines Telefonhörers (32) übertragen. Der Operatordienst (20) meldet sich mit einem entsprechenden Kennungston, der vom Mikrofon (35) empfangen und vom Multimediagerät (29) ausgewertet wird. Unmittelbar danach fordert der Zentralrechner (21) des Operatordienstes (20) dazu auf, sich gegenüber dem Dienst zu identifizieren. Das Multimediagerät (29) ist nun in der Lage, nach einer fest eingestellten Zeit nach dem Empfang des Kennungstons entweder automatisch die Identifikationsinformationen über den MFV-Sender (7) auszusenden oder die Identifikationsinformation wird über die Tastatur (31) eingegeben und ausgesendet. Aufgrund der beim Zentralrechner (21) empfangenen Identifikationsinformation erfolgt ein Abgleich mit der Datenbank, die nun den entsprechenden Dienstnutzer zuordnen kann. Danach wird eine sogenannte Authentifikation durchgeführt und zwar sendet hierzu der Operatordienst (20) eine Zufallszahl an das Multimediagerät (29), die zum mobilen Datenträger (1) übertragen wird. Der mobile Datenträger ist aufgrund eines geheimen Schlüssels in der Lage, die Zufallszahl zu verschlüsseln. Diese verschlüsselte Zufallszahl wird dann an das Multimediagerät (29) zur Aussendung übergeben. Die Datenbank (23) vergleicht die empfangene verschlüsselte Zufallszahl mit dem in der Datenbank gespeicherten Istwert bzw. mit einem Wert, der von der Kryptoeinheit 30 berechnet wird. Danach wird der Benutzer aufgefordert, die Zielrufnummer des gewünschten Teilnehmers einzugeben. Ist die gewünschte Rufnummer vorhanden und im Netz nicht besetzt, so verbindet die Vermittlungseinrichtung (22) mit dem gewünschten Teilnehmer.

## Beschreibung

Die Erfindung betrifft ein Verfahren und eine Vorrichtung zum mobilen, universellen und gesicherten Zugang zum Telefonnetz und zu angebotenen Operator- und Multimediadiensten nach dem Oberbegriff des Patentanspruchs 1 bzw. Patentanspruchs 9.

Operator- und Multimediadienste wie Homebanking, elektronische Geldbörsen, Operatordienste oder Notfallkarte für medizinische Dienste mittels Chipkarten und dazugehörigen Vorrichtungen zum Zugang sowie zum Lesen, Übertragen, Verschlüsseln, Entschlüsseln und Speichern von gewünschten bzw. erforderlichen Daten bzw. Informationen sind grundsätzlich bekannt.

Derzeit wird von einigen Banken (zum Beispiel City Bank) ein sogenanntes Homebanking angeboten. Dieses Homebanking zeichnet sich dadurch aus, daß von jedem beliebigen Telefon aus weltweit auf das eigene Bankkonto zugegriffen werden kann. Hierzu ist es erforderlich, daß sich nach dem Anruf der Teilnehmer gegenüber der Bank identifiziert. Dies erfolgt entweder mittels eines Kennwortes gegenüber dem Operator oder der Zugriff erfolgt, indem mittels Tonwahl Zeichen zur Identifikation an einen automatischen Rechner übertragen werden. Nachteil dieses Verfahrens ist es, daß sowohl ein mittels Sprache übertragenes Kennwort, aber auch mittels Töne übergebene Identifikationen im Klartext über den Fernsprechanschluß übertragen werden. Somit ist es mit relativ geringem Aufwand möglich die Daten abzuhören, um dann in einem zweiten Schritt einen unberechtigten Zugriff zu dem Konto zu erhalten.

Derzeit werden vermehrt sogenannte elektronische Geldbörsen auf dem Markt plaziert. Sie beinhalten neben der Technik der Chipkarte in den meisten Fällen auch die Sicherheitstechnik für das Zusammenwirken von Chipkarte und Rechner- und Übertragungssystemen sowie die Abrechnung der mit der Chipkarte vorgenommenen Transaktionen. Sowohl national als auch international wurden bereits zahlreiche Konzepte vorgestellt. In einigen Ländern sind bereits elektronische Geldbörsensysteme in Feldversuchen oder gar im Wirkbetrieb eingesetzt, wie zum Beispiel
- Feldversuch Eisenstadt, Österreich seit Dezember 1994
- Avant-Card in Finnland
- Danmont Konzept in Dänemark
- Mondex, in Swindon, England
- Darüberhinaus wird unter CEN TC224 WG10 eine "Intersektor electronic purse" (branchenübergreifende elektronische Geldbörse) standardisiert.

Die Abrechnung erfolgt in den bekannten Systemen nach dem folgenden Verfahren: Der erste Schritt ist das Laden von geldwerten Einheiten in die Chipkarte, wobei der Gegenwert, den der Karteninhaber in bar oder auch bargeldlos bezahlen muß, auf einem sogenannten "Poolkonto" des Börsenbetreibers hinterlegt wird. Bezahlt ein Karteninhaber anschließend mit seiner Chipkarte, werden geldwerte Einheiten aus der elektronischen Geldbörse herausgebucht und mit Hilfe eines Sicherheitsmodules zum Terminal des Serviceanbieters übertragen. Dort werden die eingenommenen geldwerten Einheiten entweder zu einem Betrag akkumuliert und mit dem Börsenbetreiber abgerechnet oder aber jeder einzelne Bezahlvorgang wird beim Börsenbetreiber zur Abrechnung eingereicht. Akkumulierte Beträge oder Einzeldatensätze werden entweder auf einer sogenannten Händlerkarte gesammelt, die der Serviceanbieter einreichen muß oder mit einem entsprechend ausgerüsteten Terminal on-line an eine Abrechnungsstelle übertragen. Die größte Verbreitung haben Telefonkarten. Telefonkarten sind Speicherchipkarten mit einem Identifikationsbereich und mindestens einem Zählerbereich. Weiterhin sind elektronische Geldbörsenanwendungen bekannt, die auf einer Mikroprozessorkarte realisiert sind. Bei Mikroprozessoranwendungen erfolgt die Steuerung der Anwendung durch ein Chipkartenbetriebssystem, wie es beispielsweise im Standard prEN726-3 definiert ist. Auch diese Anwendung zeichnet sich dadurch aus, daß auf der Karte Geldbeträge gespeichert werden, die bei jeder Abbuchung um einen festgelegten Betrag reduziert werden. Der Vorteil der Mikroprozessorkarten gegenüber der Speicherkarten besteht darin, daß die Mikroprozessorkarten prüfen können, ob das abbuchende System authentisch ist. Diese Überprüfung ist bei einer Speicherchipkarte nicht möglich. Außerdem sind ähnliche Systeme und Verfahren durch die US-A-4,859,837, WO-A-90 15 382 und die deutsche Patentanmeldung P 42 43 851.9 bekanntgeworden.

Eine Chipkarte für Bezahlvorgänge enthält neben verschiedenen Datenbereichen, wie zum Beispiel für Seriennummern, auch als Zähler ausgebildete bzw. verwendete Speicherbereiche.

Die Speicherchipkarten werden auf Authentizität zum Beispiel durch Anwendung bekannter Challenge-Response Verfahren geprüft, wie in Absatz 4.1.2.1, ab Seite 61 des Buches "Chipkarten als Werkzeug" von Beutelsberger, Kersten und Pfau beschrieben. Hierzu werden die Daten des Speicherchips ausgelesen. Mit diesen Chipdaten ist es mit einem Terminal möglich, die Karte zu identifizieren und auf Plausibilität zu prüfen. In einem im Terminal eingebauten Sicherheitsmodul wird eine Authentifikation durchgeführt. Hierzu erhält das Sicherheitsmodul die Chipdaten und errechnet hierzu aufgrund eines Systemschlüssels einen in der Speicherchipkarte befindlichen individuellen Kartenschlüssel.

Bei den derzeitig eingesetzten Chipkarten wird die Echtheit der Chipkarten geprüft. Die Überprüfung der Echtheit schließt Speicherbereiche ein, die für die Identifikation, für die Authentifikation sowie für eine Zählfunktion benötigt werden. Diese Echtheitsprüfung erfolgt mittels bekannter kryptografischer Funktionen in einem Sicherheitsmodul. Im Rahmen der Echtheitsprüfung erhält das Sicherheitsmodul die Speicherbereiche. Bestandteil dieses Speicherbereiches ist ein Zählerstand. Die Dekrementierung des Zählerbereiches erfolgt durch ein Terminal. Danach hat das Sicherheitsmodul die Möglichkeit erneut die Echtheit der Chipkarte zu überprüfen.

Es sind auch die unterschiedlichsten Operator-Dienste von verschiedenen Telekommunikationsunternehmen im Einsatz. Beispiele für solche Operator-Dienste sind:

AT&T Calling Card, MCI Calling Card, T-Connect der DT AG und US Sprint Calling Card.

Unter der Bezeichnung Virtual Calling Card (VCC) ist in den USA ein Dienst eingeführt worden, der es dem Kunden ermöglicht, durch Angabe einer Zugangskennung in Verbindung mit einer PIN (Personal Identification Number), von jedem beliebigen Telefon aus zu telefonieren; die Gebührenabrechnung erfolgt dabei über ein dem Kunden zugeordnetes Konto. Dieser Dienst gewinnt zunehmend auch in Europa an Bedeutung. So ist zum Beispiel in "Deutsche Telekom AG - Vision", Heft Februar 1995, Seiten 44 und 45, die T-Card mit Connect-Service der Deutschen Telekom beschrieben. In diesem Artikel ist ausgeführt, daß sich das Leistungsspektrum von der Telefonkarte bis hin zur Kreditkarte erstreckt und sich vor allem an Geschäftsreisende, Vieltelefonierer und Touristen wendet, die im Ausland telefonieren wollen, oder vom Ausland aus Deutschland erreichen möchten. Dieses sprachgesteuerte Dialogsystem führt den Kunden wahlweise in deutscher, englischer oder französischer Sprache zur gewünschten Anwendung. Diese Lösung hat jedoch noch folgende Nachteile:

Die manuelle Eingabe der Kundennummer und der zugehörigen PIN machen den Dienst benutzerunfreundlich. Eine Spracheingabe ist fehleranfällig und daher auch nicht benutzerfreundlich.

Der Zugangsschutz durch die PIN ähnelt einem Paßwortverfahren bei Rechnern und ist als sicherheitskritisch bekannt. Unter anderem bietet er keinen Schutz gegen einen Replayangriff, das heißt gegen eine Verwendung exakt der gleichen Daten durch einen Unberechtigten.

Alle diese Operator-Dienste zeichnen sich dadurch aus, daß über ein Telekommunikationsnetz ein Zugang zu einem Zentralrechner erfolgt. Der Zugang erfolgt über gebührenfreie Servicerufnummern, die in den wichtigsten Ländern der Erde geschaltet sind. Nach der Anwahl dieses Zentralrechners erwartet der Host eine Identifikation des jeweiligen Dienstnutzers. Diese Identifikation erfolgt mittels einer über den Telefonapparat eingegebenen Folge von Tönen. Danach wird mit der gleichen Prozedur eine Geheimzahl und danach die Rufnummer des gewünschten Partners eingegeben. Nachteil dieses Dienstes ist es, daß alle Daten im Klartext über die Leitung übermittelt werden. Eine betrügerische Nutzung des Dienstes ist somit bei Kenntnis der Daten leicht möglich.

Chipkarten, zum Beispiel mit medizinischen Daten werden derzeit in verschiedenen Versuchsstadien eingesetzt. Solche Chipkarten-Anwendungen sind beispielsweise:
- Einsatz der SmartCard in der Krebsnachsorge (Vortrag von Prof. Dr. Claus O. Köhler, DKFZ Heidelberg), Vortrag bei der GMD Darmstadt am 05.02.1992

Diese Patientenkarten sind für verschiedene Spezialanwendungen im medizinischen Bereich im Einsatz. Um die Karten auslesen zu können, muß in der Regel eine Arztpraxis aufgesucht werden. Im Notfall ist es nicht möglich, ohne Zeitverzögerung auf die Daten dieser medizinischen Chipkarte zuzugreifen.

Der Erfindung liegt deshalb die Aufgabe zugrunde, ein verbessertes Verfahren und eine verbesserte Vorrichtung zum mobilen, universellen und gesicherten Zugang des Anwenders zum Telefonnetz und zu angebotenen Operator- und Multimediadiensten zu schaffen, bei einem viel höheren Sicherheitsstandard als bisher und bei leichterer Bedienbarkeit.

Die Lösung für das erfindungsgemäße Verfahren ist im Kennzeichen des Patentanspruchs 1 beschrieben. Die Lösung für die erfindungsgemäße Vorrichtung ist insbesondere im Kennzeichen des Patentanspruchs 9 beschrieben.

Die Patentansprüche 2 bis 8 bzw. 10 bis 13 enthalten in ihrem kennzeichnenden Teil weitere Lösungen bzw. Ausgestaltungen des erfindungsgemäßen Verfahrens bzw. der Vorrichtung.

Das angegebene Verfahren in Verbindung mit dem neuen, sehr kleinen und einfach handzuhabenden Multimediagerät erlaubt einen flexiblen Zugang zum Telefonnetz und zu Multimedia- und Operatordiensten bei wesentlich größerer Sicherheit als bisher. Das Gerät hat nur maximal eine Größe eines Taschenrechners. Es läßt sich auch technisch einfach in bereits vorhandene Geräte wie elektronische Terminplaner integrieren.

Das Verfahren der erfindungsgemäßen Lösung und der Aufbau der Speicherbereiche der erfindungsgemäßen Speicherchipkarte sollen im folgenden anhand von in der Zeichnung dargestellten Ausführungsbeispielen erläutert werden.

In der Zeichnung bedeuten:
- Fig. 1: ein Prinzipschaltbild des Gesamtsystems;
- Fig. 2: eine Struktur eines Multimediagerätes sowie eines mobilen Datenträgers und
- Fig. 3: den Aufbau eines Multimediagerätes.

Es werden folgende Begriffe und zugeordnete Bezugszeichen nachfolgend und in den Figuren verwendet:
- 1: Mobiler Datenträger
- 2: Datenaustauscheinrichtung des mobilen Datenträgers
- 3: Steuereinheit des mobilen Datenträgers
- 4: Speicherbereiche des mobilen Datenträgers
- 5: Kryptoeinheit des mobilen Datenträgers
- 6: Ansteuereinheit des Multimediagerätes
- 7: MFV-Sender des Multimediagerätes
- 8: Steuereinheit des Multimediagerätes
- 9: MFV-Empfänger des Multimediagerätes
- 10: Speicher des Multimediagerätes
- 20: Operatordienst
- 21: Zentralrechner des Operatordienstes
- 22: Vermittlungseinrichtung des Operatordienstes
- 23: Datenbank des Operatordienstes
- 24: Port oder Anschaltpunkt des Operatordienstes
- 25,26: Wählnetz
- 27: Zielteilnehmer
- 28: Telefon
- 29: Multimediagerät
- 30: Kryptoeinheit des Operatordienstes
- 31: Tastatur des Multimediagerätes
- 32: Telefonhörer mit Mikrofon und Lautsprecher
- 34: ausklappbares Teil des Multimediagerätes
- 35: Mikrofon des Multimediagerätes
- 36: Display des Multimediagerätes
- 37: Einschub des Multimediagerätes für mobilen Datenträger

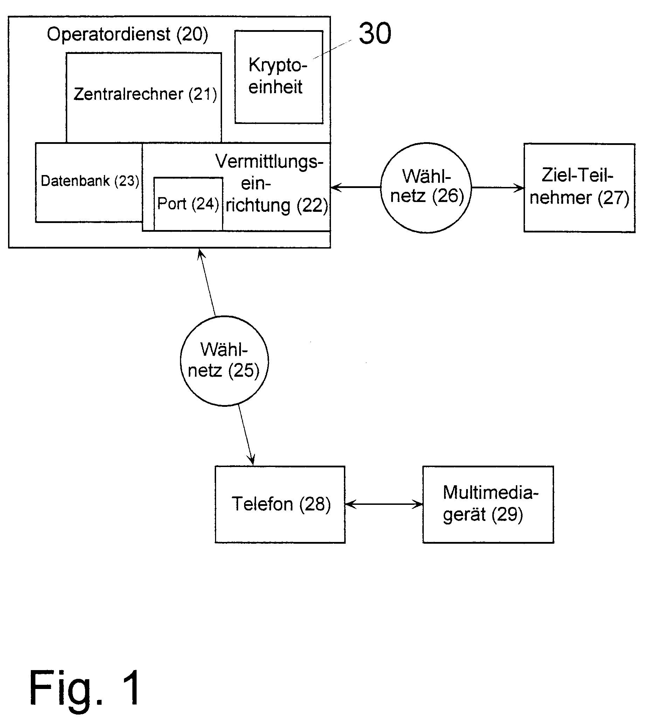

Nachfolgend wird ein Ausführungsbeispiel für einen gesicherten Zugang zu einem Operator-Dienst anhand der Fig. 1 beschrieben.

Der Zugang zu dem Operatordienst 20 erfolgt jeweils über ein Wähl- oder Telekommunikationsnetz 25. Der Benutzer bzw. Anwender, der diesen Dienst in Anspruch nehmen möchte, muß zunächst über ein Telefon 28 die Rufnummer des Opertordienstes eingeben, um dann über das Wählnetz 25 mit einem Port oder Anschaltpunkt 24 der Vermittlungseinrichtung 22 sowie dem Zentralrechner 21 des Operatordienstes 20 verbunden zu werden. Die Steuerung des Operatordienstes 20 übernimmt ein Zentralrechner. Nach der Anwahl des Operatordienstes 20 fordert der Zentralrechner 21 den Benutzer auf, sich gegenüber einer Datenbank 23 zu identifizieren. Bei den Systemen gemäß dem Stand der Technik erfolgt die Identifikation mittels MFV-Tönen, die im Klartext über die Telekommunikations-Leitung übertragen werden. Bei der erfindungsgemäßen Lösung kommt ein Multimediagerät 29 zum Einsatz.

Das Multimediagerät 29 ist eine tragbare, mobile Einrichtung. Für den angestrebten Zweck sollte das Gerät maximal die Größe eines handelsüblichen Taschenrechners aufweisen. Bei einer weiteren Ausführung ist es auch möglich, die nachfolgend beschriebene Funktionalität in handelsübliche elektronische Terminplaner mit einzubauen.

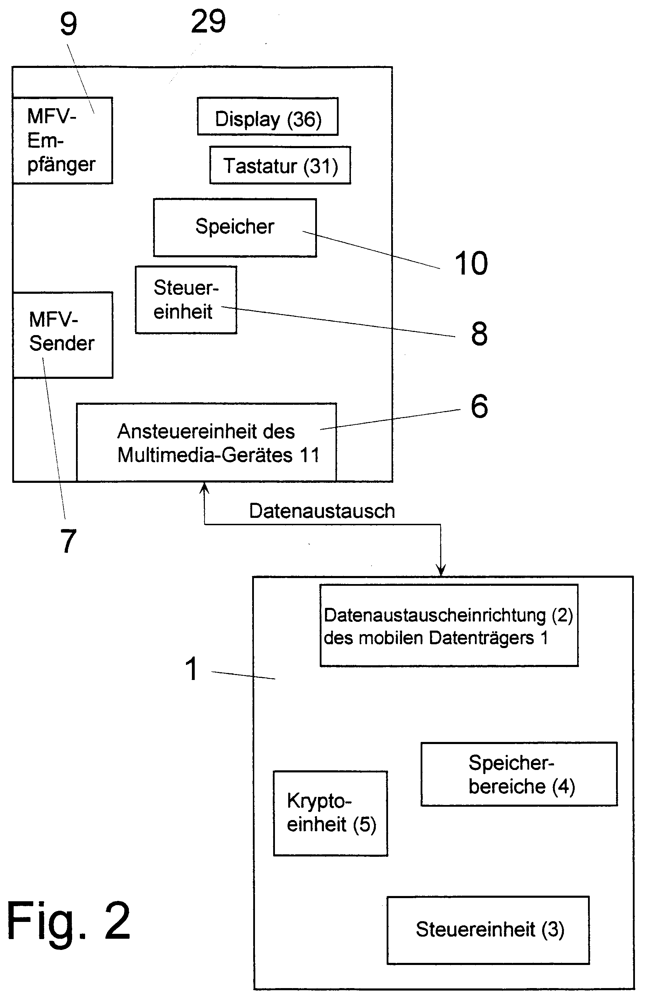

In Fig. 2 sind weitere Details des Multimediagerätes 29, des mobilen Datenträgers 1 und des Daten- und Informationsaustausches zwischen beiden dargestellt.

Das Multimediagerät 29 hat eine Ansteuereinheit 6, die mit der Daten- und Informationsaustauscheinrichtung 2 eines mobilen Datenträgers 1, zum Beispiel in Form einer bekannten Chipkarte, durch Einschub in Verbindung gebracht werden kann. Das Multimediagerät hat schaltungsmäßig im wesentlichen einen MFV-Empfänger 9 und einen -Sender 7, eine Steuereinheit 8, einen Speicher 10, eine Tastatur 31 und ein Display 36, womit alle erfoderlichen Funktionen initialisiert bzw. ausgeführt werden. Der mobile Datenträger 1 umfaßt die bereits genannte Datenaustauscheinrichtung 2, einen Speicher 4 mit bestimmten Bereichen, eine Steuereinheit 3 und eine kryptografische Verschlüsselungseinheit 5.

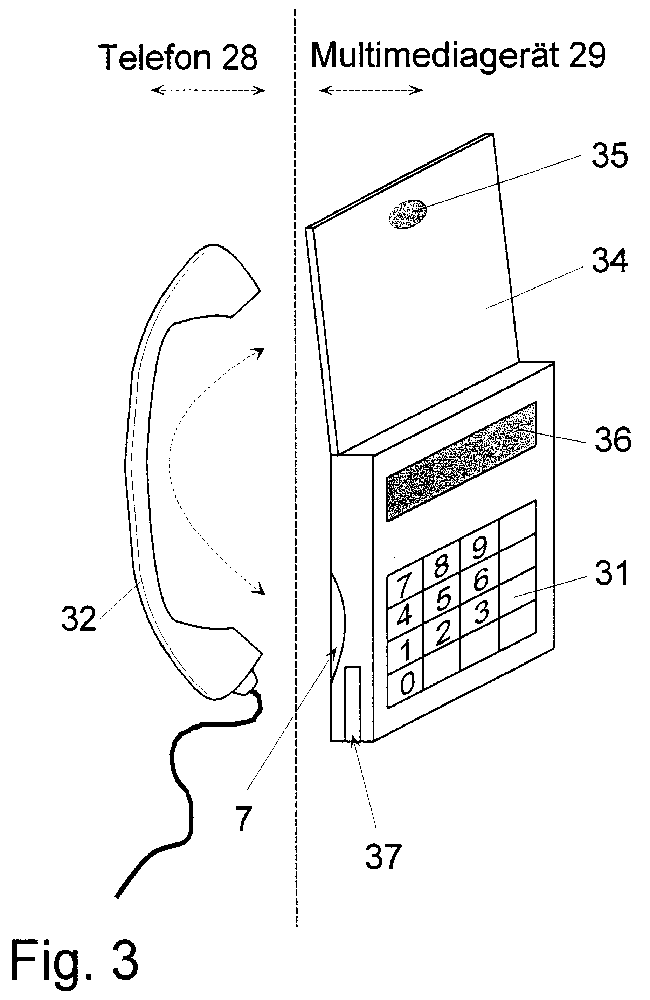

Eine Ausführung des Multimediagerätes 29 ist in der Fig. 3 gezeigt. Über eine Eingabetastatur 31 können Ziffern eingegeben werden, die von dem Multimediagerät 29 an einen steckbaren, mobilen Datenträger 1 übergeben werden. Dieser steckbare, mobile Datenträger 1 wie beispielsweise eine Chipkarte oder eine Plug-In-Chipkarte ist nun in der Lage, die über die Tastatur 31 eingegebenen Daten zu verschlüsseln. Nach der Verschlüsselung der Daten erfolgt eine Rückgabe der Daten an das Multimediagerät 29. Nach der Übergabe kann das Multimediagerät 29 die verschlüsselten Daten dann unmittelbar über einen eingebauten MFV-Sender 7 an das Mikrofon des Telefonhörers 32 übergeben. Weiteres Merkmal des Multimediagerätes 29 mit einem einsteckbaren mobilen Datenträger 1 ist es, daß ein ausklappbares Teil 34 ein Mikrofon 35 enthält, welches die Töne des Lautsprechers des Telefonhörers 32 aufnehmen kann.

Weiterhin ist in dem Multimediagerät 29 ein Display eingebaut, mit dem sowohl die über die Tastatur 31 eingegebenen Zeichen kontrolliert werden könnnen, als auch die über das Mikrofon 35 empfangenen Zeichen angezeigt werden können.

Der Ablauf im Gesamtsystem ist nun folgendermaßen.
a) Der Benutzer wählt über das Telefon 28 die Zugangsnummer des Operatordienstes 20 an. Alternativ kann die Rufnummer auch mit Hilfe des Multimediagerätes 29 angewählt werden, indem zum Beispiel mit einer Funktionstaste die entsprechende Zugangsrufnummer ausgewählt wird. Danach hält er das Multimediagerät 29 an den Telefonhörer 32 und über den MFC-Sender 7 wird die Wahlinformation verfügbar. Die Wahl mit Hilfe dieses Gerätes ist jedoch nur dann möglich, wenn bei dem jeweiligen Telefonanschluß eine MFV-Wahl zugelassen ist. Andernfalls wird das Multimediagerät 29 erst nach der Anwahl der Rufnummer über die Tastatur des Telefones 28 an den Telefonhörer 32 gehalten.
b) Der Operatordienst 20 meldet sich mit einem entsprechenden Kennungston. Dieser Kennungston wird nun von dem Mikrofon 35 des Multimedia-Gerätes 29 empfangen und von dem Gerät ausgewertet. Unmittelbar danach fordert der Zentralrechner 21 des Operatordienstes 20 dazu auf, sich gegenüber dem gewünschen Dienst zu identifizieren. Das Multimediagerät 29 ist nun in der Lage nach einer fest eingestellten Zeit nach dem Empfang des Kennungstones entweder automatisch die Identifikationsinformationen über den MFV-Sender 7 auszusenden, oder es wird die Identifikationsinformation über die Tastatur 31 eingegeben und dann ausgesendet. Im ersten Fall ist die Identifikationsinformation in Speicherbereichen 4 des mobilen Datenträgers 1 gespeichert und wird an das Multimediagerät 29 übergeben.
c) Aufgrund der bei dem Zentralrechner 21 empfangenen Identifikationsinformation erfolgt ein Abgleich mit der Datenbank 23. Die Datenbank 23 kann nun den entsprechenden Dienstbenutzer zuordnen.
d) Da die über die Leitung übertragene Information jedesmal identisch ist (Schwachstelle bei dem Stand der Technik), ist es erforderlich, eine zusätzliche Prüfung durchzuführen, ob die Informationen auch authentisch sind. Hierzu wird zwischen dem Operatordienst 20 und dem Datenträger 1 des Multimediagerätes 29 eine sogenannte Authentifikation durchgeführt.
e) Der Operatordienst 20 sendet hierzu eine Zufallszahl an das Multimediagerät 29. Diese Zufallszahl wird an den mobilen Datenträger 1 übergeben. Der mobile Datenträger 1 ist aufgrund eines geheimen Schlüssels (der nun dem Datenträger und der Datenbank 23 des Zentralrechners bekannt ist) in der Lage, die Zufallszahl zu verschlüsseln. Diese verschlüsselte Zufallszahl wird dann an das Multimediagerät 29 zur Aussendung über den MFV-Sender 7 übergeben.
f) Die empfangene verschlüsselte Zufallszahl wird mit dem in der Datenbank 23 gespeicherten Ist-Wert verglichen. Alternativ kann der Ist-Wert mittels einer kryptografischen Funktion errechnet werden. Erst wenn der empfangene Soll-Wert mit dem Ist-Wert übereinstimmt, kann der Operator-Dienst 20 davon ausgehen, daß der anfordernde Dienstenutzer authentisch ist.
g) In einem weiteren Schritt wird der Dienstenutzer dann aufgefordert die Zielrufnummer des gewünschten Teilnehmers einzugeben. Auch hier kann zur Erhöhung des Datenschutzes eine Verschlüsselung der Rufnummer mittels des in dem Multimediagerät 29 eingesteckten mobilen Datenträgers 1 erfolgen.
h) Ist die gewünschte Rufnummer vorhanden und im Netz 26 nicht besetzt, so verbindet die Vermittlungseinrichtung 22 mit dem gewünschten Teilnehmer. Nun kann das Multimediagerät 29 vom Telefonhörer 32 bis zum nächsten Einsatz entfernt werden.
i) Optional können mit dem Multimediagerät 29 auch Servicefunktionen in dem Zentralrechner 21 durchgeführt werden. Beispielsweise kann der Benutzer jederzeit seine persönliche Geheimzahl ändern, den aktuellen Kontostand abfragen oder spezielle Dienstleistungen in Anspruch nehmen. Bei jeder Datenübertragung ist es nun wiederum sinnvoll die Daten zu verschlüsseln.
j) Optional können die empfangenen Daten in Speicherbereichen 4 des mobilen Datenträgers 1 gespeichert werden, um sie von dem Kunden jederzeit wieder mit dem Multimediagerät 29 anzeigen zu können. Beispielsweise können alle Transaktionen gespeichert werden oder eine Auflistung der geführten Telefonate mit den Abrechnungsfunktionen, um nach dem Ende einer Abrechnungsperiode eine Plausibilisierung mit der Rechnung des Diensteanbieters durchführen zu können.

Nachfolgend wird ein Ausführungsbeispiel für ein Low-cost-Ladeterminal für elektronische Geldbörsen beschrieben, die bereits vielfältig im Einsatz bzw. im Probebetrieb sind.

Um diese elektronischen Geldbörsen von beliebigen Stellen aus aufladen zu können, kommt ein beschriebenes Multimediagerät 29 zum Einsatz. Zur Nachladung von elektronischen Geldbörsen ist es erforderlich, daß eine sogenannte Ladezentrale angerufen wird. Danach erfolgt ein kryptografisch gesicherter Datenaustausch zwischen der elektronischen Geldbörse und einer Ladezentrale.

In einem ersten Schritt erfolgt eine Identifikation entsprechend der Schritte a) - f) beim vorher beschriebenen Ausführungsbeispiel. Nach der Identifikation bzw. Authentifikation der Geldbörse mittels Multimediagerät 29 erfolgt eine Echtheitsprüfung Zentrale durch die Geldbörse. Für den eigentlichen Ladevorgang werden sogenannte Kryptogramme mehrfach zwischen der elektronischen Geldbörse und der Ladezentrale ausgetauscht.

Für Homebanking-Anwendungen, zum Beispiel der City Bank, ist eine Identifikation erforderlich. Weiterhin können Bankgeschäfte abgewickelt werden. Auch hier kommt ein Multimediagerät 29 zum Einsatz.

In einem ersten Schritt erfolgt eine Identifikation entsprechend der Schritte a) bis f) beim vorher beschriebenen Ausführungsbeispiel. Nach der mit dem Multimediagerät 29 durchgeführten, gesicherten Identifikation, werden Bankgeschäfte wie zum Beispiel Überweisungen gesichert durchgeführt. Die Bank benötigt hierzu als Gegenstelle einen Zentralrechner 21 mit Datenbank 23 und eine Kryptoeinheit 30.

In einer weiteren Ausführung kann das Multimediagerät 29 im medizinischen Bereich zur Übermittlung von Patientendaten genutzt werden.

## Patentansprüche

1. Verfahren zum universellen und gesicherten Zugang zum Telefonnetz und zu angebotenen Multimedia- und Operatordiensten über Wähltelekommunikationsnetze, indem über ein Telefon die Rufnummer des Multimedia- oder Operatordienstes eingegeben wird, um dann über ein Wählnetz mit einem Anschaltepunkt oder Port einer Vermittlungseinrichtung sowie einem Zentralrechner des Multimedia- oder Operationsdienstes verbunden zu werden, wobei der Zentralrechner die Steuerung übernimmt und nach Anwahl des Multimedia- oder Operatordienstes den Benutzer auffordert, sich gegenüber einer Datenbank zu identifizieren, dadurch gekennzeichnet,
daß die Anwahl des gewünschten Multimedia- bzw. Operatordienstes (20) mit Hilfe eines Multimediagerätes (29) erfolgt, daß danach der Benutzer dieses Multimediagerät (29) an einen Telefonhöhrer (32) hält und daß die Wahlinformation über einen in das Multimediagerät (29) integrierten MFC-Sender (33) erfolgt,
daß der Multimedia- bzw. Operatordienst (20) sich mit einem entsprechenden Kennungston meldet, der von einem integrierten Mikrofon (35) des Multimediageräts (29) empfangen und ausgewertet wird, wonach unmittelbar der Zentralrechner (21) zur Identifikation auffordert und
daß das Multimediagerät (29) nach einer fest eingestellten Zeit nach dem Empfang des Kennungstons entweder automatisch die Identifikationsinformationen über den integrierten MFV-Sender (33) des Multimediageräts (29) aussendet oder die Identifikatonsinformation wird über eine Tastatur (31) im Multimediagerät (29) eingegeben und dann ausgesendet.

2. Verfahren nach Patentanspruch 1, dadurch gekennzeichnet,
daß die Identifikationsinformation entweder in einem Speicher (10) des Multimediageräts (29) oder in einem mobilen Datenträger (1) gespeichert ist, und
daß bei Vorhandensein eines mobilen Datenträgers (1) die gespeicherte Identifikationsinformation über einen Einschub für mobile Datenträger an das Multimediagerät (37) übertragen wird.

3. Verfahren nach Patentanspruch 1 oder 2, dadurch gekennzeichnet,
daß zwischen dem Multimedia- bzw. Operatordienst (20) und dem mobilen Datenträger (1) eine Authentifikation durchgeführt wird, indem vom Multimedia- oder Operatordienst (20) eine Zufallszahl an das Multimediagerät (29) gesendet wird, das diese Information auf den jeweiligen mobilen Datenträger (1) überträgt,
daß der mobile Datenträger (1) mit Hilfe eines Geheimschlüssels, der nur dem mobilen Datenträger (1) und der Datenbank (23) bekannt ist, die Zufallszahl verschlüsselt und diese dann an das Multimediagerät (29) zur Aussendung über den MFV-Sender (33) transportiert.

4. Verfahren nach Patentanspruch 3, dadurch gekennzeichnet,
daß die Datenbank (23) die empfangene verschlüsselte Zufallszahl mit dem in der Datenbank gespeicherten Istwert vergleicht und bei Übereinstimmung die Authentität bestätigt, worauf der Benutzer in einem weiteren Schritt aufgefordert wird, die Zielrufnummer des gewünschten Teilnehmers einzugeben.

5. Verfahren nach Patentanspruch 4, dadurch gekennzeichnet,
daß zur Erhöhung des Datenschutzes eine Verschlüsselung der Rufnummer mit Hilfe des im Multimediagerät (29) befindlichen mobilen Datenträgers (1) erfolgt.

6. Verfahren nach einem der Patentansprüche 1 bis 5, dadurch gekennzeichnet,
daß die empfangenen Daten bzw. Informationen in dem mobilen Datenträger (1) optional gespeichert werden.

7. Verfahren nach einem der Patentansprüche 1 bis 6, dadurch gekennzeichnet,
daß das Multimediagerät (29) zur Aufladung von als elektronische Geldbörsen verwendete Chipkarten operiert, indem eine Ladezentrale über das Multimediagerät (29) angerufen wird und nach der Identifikation bzw. Authentifikation der Geldbörse eine Echtheitsprüfung der Geldbörse durch den Zentralrechner (21) erfolgt und
daß für den Ladevorgang mehrfach zwischen der als elektronische Geldbörse dienenden Chipkarte und der Ladezentrale Kryptogramme ausgetauscht werden, die mit Hilfe bestimmter Programme bzw. Protokolle gesteuert werden.

8. Verfahren nach einem der Patentansprüche 1 bis 7, dadurch gekennzeichnet,
daß Identifikationsdaten von Zeit zu Zeit geändert werden, indem nach einer erfolgreichen Überprüfung einer Anforderung vom Multimediagerät (29) der Multimedia- oder Operatordienst (20) in verschlüsselter Form neue Identifikationsdaten an das Multimediagerät (29) sendet, die für den nächsten Zugang benutzt werden, die durch das Multimediagerät (20) entschlüsselt werden und im Speicher (10) des Multimediageräts (29) und/oder im Speicher (4) des mobilen Datenträgers gespeichert werden.

9. Vorrichtung zum universellen und gesicherten Zugang zu einem Telefonnetz und zu angebotenen Multimedia- oder Operatordiensten nach dem Verfahren nach einem oder mehreren der Patentansprüche 1 bis 8, dadurch gekennzeichnet,
daß das Multimediagerät (29) als tragbare, mobile Vorrichtung mit einer Tastatur (31) und einem Display (36) ausgebildet ist, die ein ausklappbares Teil (34) mit integrierten Mikrofon (35) enthält, einem Einschub (37) für mobile Datenträger (1) und einen MFV-Sender (7).

10. Vorrichtung nach Patentanspruch 9, dadurch gekennzeichnet,
daß das in das aufklappbare Teil (34) integrierte Mikrofon (35) im ausgeklappten Zustand sich im Bereich der Hörmuschel eines normalen Telefonhörers (32) befindet und der MFV-Sender (7) des Multimediagerätes (29) im Bereich der Sprechmuschel des Telefonhörers (32).

11. Vorrichtung nach einem der Patentansprüche 9 oder 10, dadurch gekennzeichnet,
daß zum Datenaustausch mit dem mobilen Datenträger (1) eine Ansteuereinheit (6) angeordnet ist und
daß zum Datenaustausch mit einem Telefon (28) sowohl ein MFV-Empfänger (9) als auch ein MFV-Sender (7) angeordnet ist und
daß zur Steuerung der Komponenten des Multimediagerätes (29) eine Steuereinheit (8) im Multimediagerät (29) angeordnet ist.

12. Vorrichtung nach einem der Patentansprüche 9 bis 11, dadurch gekennzeichnet,
daß der mobile Datenträger (1) mit einer Datenaustauscheinrichtung (2), mit einer eigenen Steuereinheit (3), mit einem Speicher mit Speicherbereichen (4) und mit einer kryptografischen Verschlüsselungseinheit (5) ausgestattet ist.

13. Multimediagerät nach einem der Patentansprüche 9 bis 12, dadurch gekennzeichnet,
daß es zur Nachladung von als Chipkarten ausgebildeten elektronischen Geldbörsen verwendet wird.

14. Multimediagerät nach einem der Patentansprüche 9 bis 12, dadurch gekennzeichnet,
daß es für den Datenaustausch für Homebanking eingesetzt wird.
